# EUROPEAN PATENT SPECIFICATION

(11) **EP 3 878 772 B1**
(45) Date of publication and mention of the grant of the patent: **04.06.2025**
(21) Application number: 19750621.5
(22) Date of filing: 21.02.2019
(51) Int. Cl.: B65G 1/04, B65G 1/137

(54) **ITEM TRANSPORTATION ROBOT AND CONTROL METHOD THEREFOR**
ARTIKELTRANSPORTROBOTER UND STEUERVERFAHREN DAFÜR
ROBOT DE TRANSPORT D'ARTICLES ET SON PROCÉDÉ DE COMMANDE

(30) Priority: 05.11.2018 CN 201811306685; 05.11.2018 CN 201821825740 U
(43) Date of publication of application: 15.09.2021
(73) Proprietor: Shanghai Quicktron Intelligent Technology Co., Ltd, Shanghai 200435 (CN)
(72) Inventor: XING, Leilei, Shanghai 200435 (CN); HUANG, Run, Shanghai 200435 (CN); TANG, Tang, Shanghai 200435 (CN); NI, Fei, Shanghai 200435 (CN)
(74) Representative: SONN Patentanwälte GmbH & Co KG
(86) International application number: PCT/CN2019/075723
(87) International publication number: WO 2019/154433

(56) References cited:
- EP-A1- 1 172 326
- CN-A- 1 959 578
- CN-A- 108 313 606
- CN-A- 108 726 061
- CN-A- 108 726 061
- CN-A- 109 227 529
- DE-B3- 102007 025 488
- JP-A- 2008 024 461
- JP-A- 2008 214 075
- JP-A- 2012 076 857
- JP-A- S5 648 309
- JP-B2- 4 706 488
- JP-U- H0 466 105
- US-B2- 7 575 407

## Description

### TECHNICAL FIELD

The present invention relates to the field of robotics, and, more especially, to a robot for handling cargo and a method for controlling the robot.

### BACKGROUND

With the increasing demand for industrial automation, more and more robots are being used to fulfil functions such as automatic transportation and conveyance of materials in factories or warehouses. Automatic Guided Vehicle (AGV) is a kind of unmanned automatic vehicle provided with such automatic guidance devices as a magnetic stripe, track or laser, powered by battery to travel along a planned path, and equipped with safety protection and various auxiliary mechanisms (such as transfer and assembly mechanisms).

In 2011, KIVA put forward the shelf-to-man handling method. In a usual handling process, a robot, according to operation instructions, first arrives at a shelf to be visited, lift up or lower down to a suitable height, and then picks cargo; and the robot next, according to operation instructions, moves to a shelf at the destination, and then rises or falls to a suitable height to put down the cargo. This method realizes automatic mechanized operation, but each operation is carried out in sequence, resulting in low operational efficiency.

The contents in the Background are merely the technologies known by the inventor, instead of surely representing the prior art in the field.

CN108726061A discloses a method according to the preamble of claim 1 and a robot and a cargo carrying method thereof. The robot comprises a moving unit, a storing unit and a transmission unit, wherein the transmission unit comprises a lifting module, a rotary module and a telescopic module. The invention further provides the cargo carrying method of the robot. The cargo carrying method comprises the following steps: providing the robot for carrying cargoes and providing a goods shelf for storing the carried cargoes, wherein the robot comprises the moving unit, the storing unit and the transmission unit; the goods shelf has a layered structure, and one or more cargoes are stored on each layer; the goods shelves are arranged into rows, an aisle is formed between every two adjacent rows of cargo shelves; and the aisle is used for allowing the robot to move.

### SUMMARY OF THE INVENTION

In light of above, the present invention provides a control method for a cargo handling robot according to claim 1, wherein the cargo handling robot comprises a motion unit, a cargo picking and placing unit, and a lifting unit, the cargo picking and placing unit and the lifting unit are carried by the motion unit, and the lifting unit is configured to raise or lower the cargo picking and placing unit, the control method comprising: receiving an operation instruction for the cargo handling robot; controlling, according to the operation instruction, the motion unit of the cargo handling robot to move to a shelf at a first position and pick a cargo at a first height; controlling, according to the operation instruction, the motion unit of the cargo handling robot to move to a shelf at a second position and place the cargo at a second height on the shelf at the second position, wherein the lifting unit raises or lowers the cargo picking and placing unit from the first height to the second height in the course of movement of the cargo handling robot from the first position to the second position, wherein the lifting unit is configured to raise or lower the cargo picking and placing unit according to preset trajectory information.

According to the present invention, the step of picking the cargo at the first height includes: measuring a distance L1 from the cargo picking and placing unit to the cargo, and controlling the cargo picking and placing unit to extend outwards a distance L to pick the cargo at the first height, wherein L = L1 + L2, and L2 refers to a length of the cargo or a pallet that carries the cargo.

According to the present invention, the lifting unit is configured to raise or lower the cargo picking and placing unit from the first height to the second height when the cargo handling robot arrives at the second position.

According to one aspect of the present invention, the trajectory information includes continuous uniform acceleration, uniform velocity and uniform deceleration stages.

According to one aspect of the present invention, the cargo picking and placing unit is stationary in a vertical direction when the cargo handling robot moves to the second position and places the cargo on the shelf at the second position.

The present invention also relates to a cargo handling robot according to claim 4, comprising: a motion unit; a cargo picking and placing unit, carried by the motion unit and configured to pick a cargo or place the cargo on a shelf; a lifting unit, carried by the motion unit and configured to raise or lower the cargo picking and placing unit; and a control unit, coupled with the motion unit, the cargo picking and placing unit, and the lifting unit and configured to be capable of executing the control method of the present invention.

According to one aspect of the present invention, the work-bin robot further comprises a camera or radar, configured to be capable of measuring a distance between the cargo picking and placing unit and the cargo.

According to one aspect of the present invention, the control unit is configured to be capable of controlling the cargo picking and placing unit to pick the cargo according to the distance measured by the camera or radar.

According to one aspect of the present invention, the lifting unit is configured to raise or lower the cargo picking and placing unit from the first height to the second height when the cargo handling robot arrives at the second position.

According to one aspect of the present invention, the trajectory information includes continuous uniform acceleration, uniform velocity and uniform deceleration stages.

According to one aspect of the present invention, the control device is configured to keep the cargo picking and placing unit stationary in a vertical direction when the cargo handling robot moves to the second position and places the cargo on the shelf at the second position.

According to the embodiments of the present invention, the motion of a fork arm is linked with the movement of the cargo handling robot, which saves the time for the fork arm to rise and fall independently, thus accelerating the time for picking and placing the cargo.

### BRIEF DESCRIPTION OF THE DRAWINGS

The accompanying drawings are provided for the purpose of further understanding of the present invention, and the schematic embodiments and description serve to illustrate the present invention, neither of which should make any improper limitation of the present invention. In the drawings:
FIG. 1 is a flow chart of a control method for a cargo handling robot according to the first embodiment of the present invention;
FIG. 2 is a schematic diagram of a cargo handling robot according to the second embodiment of the present invention;
FIG. 3 shows preset trajectory information according to one embodiment of the present invention; and
FIG. 4 is a schematic diagram of a shelf and cargo according to one embodiment of the present invention.

### DETAILED DESCRIPTION OF THE EMBODIMENTS OF THE INVENTION

Certain exemplary examples will be described below only in a brief manner. Therefore, the drawings and the following description are deemed essentially exemplary, instead of limitative.

In the description of the present invention, it need be understood that the orientation or position relations denoted by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position as shown in the accompanying drawings, and only used for the purpose of facilitating description for the present invention and simplification of the description, instead of indicating or suggesting that the denoted devices or elements must be specifically oriented, or configured or operated in some specific orientation. Thus, such terms should not be construed to limit the present invention. In addition, such terms as "first" and "second" are only used for the purpose of description, rather than indicating or suggesting relative importance or implicitly indicating the number of the designated technical features. Accordingly, features defined with "first" or "second" may, expressly or implicitly, include one or more of such features. In the description of the present invention, "multiple" means two or more, unless otherwise defined explicitly and specifically.

In the description of the present invention, it need be specified that, unless otherwise specified and defined explicitly, such terms as "mount" "link" and "connect" should be understood as generic terms. For example, connection may refer to fixed connection, dismountable connection, or integrated connection; also to mechanical connection, electric connection or intercommunication; further to direct connection, or connection by an intermediary medium; or even to internal communication between two elements or interaction between two elements. For those skilled in the art, they can construe the specific meaning of such terms herein in light of specific circumstances.

Herein, unless otherwise specified and defined explicitly, if a first feature is "above" or "below" a second one, it may cover the direction contact between the first and second features, also cover the contact via another feature therebetween, instead of the direct contact. Furthermore, if a first feature "above", "over" or "on the top of" a second one, it may cover that the first feature is right above or on the inclined top of the second feature, or just indicate that the first feature has a horizontal height higher than that of the second feature. If a first feature is "below", "under" or "on the bottom of" a second feature, it may cover that the first feature is right below and on the inclined bottom of the second feature, or just indicates that the first feature has a horizontal height lower than that of the second feature.

The disclosure below provides many different embodiments and examples for achieving different structures described herein. In order to simplify the disclosure herein, the following will give the description of the parts and arrangements embodied in specific examples. Surely, they are just for the exemplary purpose, not intended to limit the present invention. Besides, the present invention may repeat a reference number and/or reference letter in different examples, and such repeat is for the purpose of simplification and clarity, and itself denotes none of the relations among various embodiments and/or arrangements as discussed. In addition, the present invention provides examples for a variety of specific techniques and materials, but the ordinarily skilled persons in the art are aware of an application of other techniques and/or a use of other materials.

The following description, along with the accompanying drawings, sets forth the specific examples of the present invention. It should be understood that the preferable examples described herein are only for the purpose of illustrating and explaining, instead of limiting, the present invention.

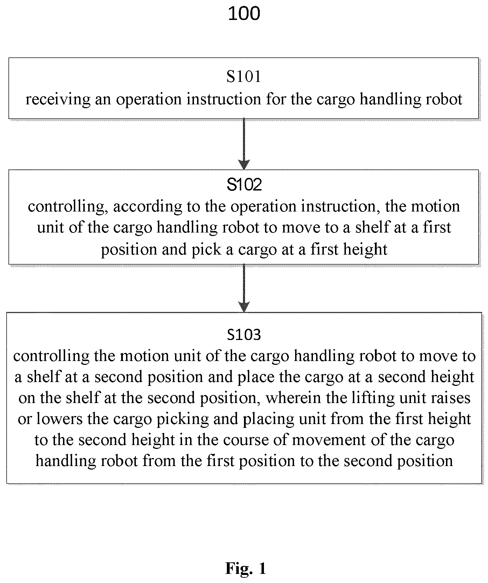

FIG. 1 shows a control method 100 for a cargo handling robot according to the first embodiment of the present invention. The control method 100 of the first embodiment can be adapted to various types of cargo handling robots. Generally, the cargo handling robot comprises a motion unit, a cargo picking and placing unit and a lifting unit. The motion unit, for example, includes one or more of a chassis, a frame, a driving wheel, a driven wheel, and an electric motor. The chassis and the frame can be used to carry various components, and the electric motor drives the driving wheel to drive the whole cargo handling robot to move to perform various motions such as advancing, retreating, and turning. The motion unit, if necessary, may also include a driven wheel. The cargo picking and placing unit and the lifting unit are carried by the motion unit. The cargo picking and placing unit, such as a mechanical arm or a fork arm device, can be used for grasping cargo. The lifting unit is configured to raise or lower the cargo picking and placing unit to different heights, and may include for example a guide rail or a chain drive. Certainly, the cargo handling robot includes a control unit coupled with the motion unit, the cargo picking and placing unit, and the lifting unit to control the operation of each portion. The control unit may be integrated with other components, or may be a separate and external control unit in communication coupling with other components. These all fall into the protection scope of the present invention.

As shown in FIG. 1, in step S101, an operation instruction for the cargo handling robot is received. For example, the control unit of the cargo handling robot receives the operation instruction. According to the specific operation situation, operation instructions may include all kinds of information. For example, an operation instruction may include the information about a transportation task, such as that the cargo is located at which height on which shelf, the cargo is to be transported to which height on which shelf, etc. The present invention makes no limitation of the specific content of operation instructions. After receiving the operation instruction, an analysis of the operation instruction, if necessary, may be made to obtain the specific information content of the transportation task.

In step S102, according to the operation instruction, the motion unit of the cargo handling robot is controlled to move to a shelf located at a first position and pick the cargo located at a first height. As set forth above, the operation instructions usually indicate which shelf the target cargo is located at, where the shelf is, and the specific height of the cargo, etc. After obtaining such information, the cargo handling robot is enabled to move to the target shelf by controlling the motion unit of the robot, and the target cargo is grasped by the cargo picking and placing unit. The cargo handling robot can move to the shelf at the first position through a variety of methods, such as computer vision navigation, inertial navigation, electromagnetic navigation, etc. The present invention makes no limitation of the specific navigation methods.

In step S103, after grasping the target cargo, the motion unit of the cargo handling robot is continuously controlled according to the operation instruction to move to a shelf located at a second position, and place the cargo to a second height on the shelf at the second position. In the course of movement of the cargo handling robot from the first position to the second position, the lifting unit raises or lowers the cargo picking and placing unit from the first height to the second height.

According to one preferred implementation mode, after the cargo handling robot moves to the second position, the cargo picking and placing unit is stationary in a vertical direction in the course of placing the cargo on the shelf at the second position. In this way, after the cargo handling robot moves in place, there is no need to consume additional time to adjust the height of the cargo picking and placing unit.

The step of picking the cargo at the first height, for example, includes: measuring a distance L1 from the cargo picking and placing unit to the cargo, controlling the cargo picking and placing unit to extend outwards a distance L to pick the cargo at the first height, wherein L = L1 + L2, and L2 refers to a length of the cargo or a pallet that carries the cargo.

The lifting unit is configured to raise or lower the cargo picking and placing unit according to preset trajectory information. Preferably, the lifting unit is configured to raise or lower the cargo picking and placing unit from the first height to the second height when the cargo handling robot arrives at the second position. For example, the control unit calculates the time needed by the movement from the first position to the second position, and calculates the height difference between the first height and the second height in the meanwhile. By adjusting the trajectory information of the lifting unit, the cargo picking and placing unit may be raised or lowered in place when the cargo handling robot arrives at the second position.

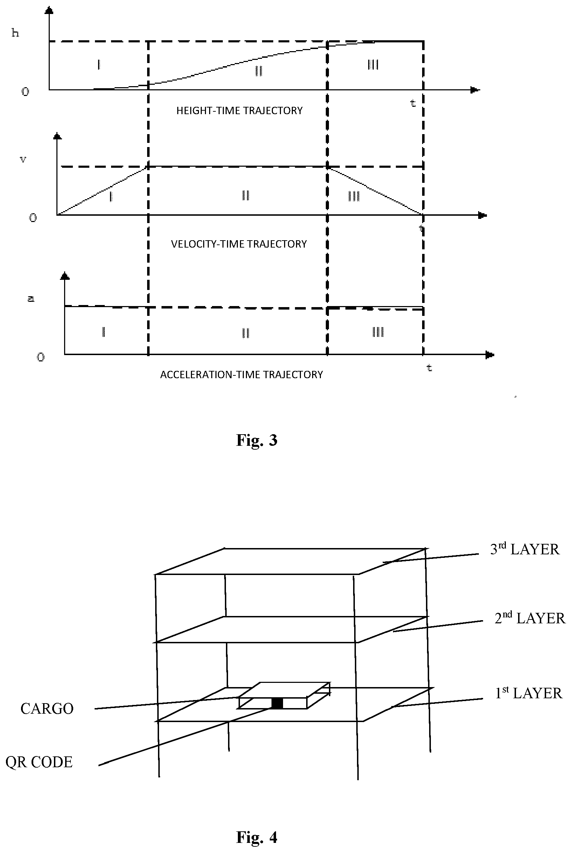

According to one preferred implementation mode of the present invention, the trajectory information includes continuous uniform acceleration, uniform velocity and uniform deceleration stages. The details are shown in FIG. 3.

According to the control method 100 of the first embodiment of the present invention, the motion of the cargo picking and placing unit, such as a fork arm, is linked with the movement of the robot, which saves the time for raising or lowering the fork arm independently, thus saving the time for picking and placing the cargo.

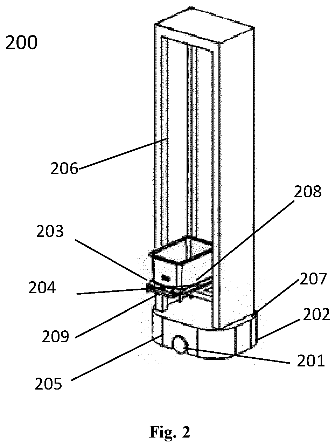

A cargo handling robot 200 according to the second embodiment of the present invention is described below with reference to FIG. 2. The cargo handling robot 200 comprises: a motion unit, a cargo picking and placing unit, a lifting unit, and a control unit. The details of each unit will be described below.

The motion unit, for example, includes a base 202 and a wheel 201, as well as an electric motor not shown, of the cargo handling robot. The base is used to carry various components of the robot. The electric motor can drive the wheel 201 to drive the whole cargo handling robot 200 to perform various movements, such as advancing, retreating and turning.

According to one preferred implementation mode, the cargo picking and placing unit includes a fork arm 203, a retractable motor 204, and a fork arm platform 208. The cargo picking and placing unit is carried by the motion unit and configured to pick cargo from a shelf or place the cargo on the shelf. The retractable motor 204 can drive the fork arm 203 to extend or retract. For example, when it is necessary to grasp the cargo, the retractable motor 204 drives the fork arm 203 to extend outside a certain distance to reach a position below the target cargo, and then drives the fork arm 203 to retract to take back the cargo and then place the same on the fork arm platform 208. The fork arm 203, the retractable motor 204, and the fork arm platform 208 constitute one preferred implementation mode of the cargo picking and placing unit, but the present invention is not limited to this. Those skilled in the art can also devise other implementation modes, such as using a mechanical arm or mechanical claw to pick and place cargo, all of which are within the scope of the present invention.

The lifting unit is carried by the motion unit and configured to raise or lower the cargo picking and placing unit to a certain target height. As shown in FIG. 2, in one preferred implementation mode, the lifting unit includes a chain 206 and a lifting motor 205, and the cargo picking and placing unit (e.g., including the fork arm 203, the retractable motor 204 and the fork arm platform 208) is fixed on the chain 206, so that when the lifting motor 205 drives the chain 206 to rotate, the height of the cargo picking and placing unit will be adjusted accordingly. Those skilled in the art can also devise other ways to realize the lifting unit, for example, by a guide rail structure, all of which are within the protection scope of the present invention.

The control unit, for example, is the central controller of the cargo handling robot, which controls the overall operation of the robot. The control unit is coupled with the motion unit, the cargo picking and placing unit, and the lifting unit, and configured to control the lifting unit to raise or lower the cargo picking and placing unit from the first height to the second height in the course of movement of the cargo handling robot from the first position to the second position.

According to one preferred implementation mode, the control unit is configured to: after the cargo handling robot moves to the second position, keep the cargo picking and placing unit stationary in a vertical direction in the course of placing the cargo on the shelf at the second position.

According to one preferred implementation mode, the cargo handling robot also comprises a camera or radar 209 configured to be capable of measuring a distance between the cargo picking and placing unit and the cargo. The camera or radar 209 is coupled with the control device, and, therefore, the control device can more accurately control the cargo picking and placing unit to pick the cargo according to the distance measured by the camera or radar. According to one preferred implementation mode of the present invention, the cargo picking and placing unit may include a fork arm device. The fork arm device usually needs to extend outwards a certain distance reach a position below the cargo when picking the cargo. Therefore, the step of picking the cargo at the first height may include: measuring a distance L1 from the cargo picking and placing unit to the cargo, controlling the cargo picking and placing unit to extend outwards a distance L to pick the cargo at the first height, wherein L = L1 + L2, and L2 refers to a length of the cargo or a pallet that carries the cargo. The distance from the cargo picking and placing unit to the cargo can be measured by means of the radar or camera.

According to one preferred implementation mode, the lifting unit is configured to raise or lower the cargo picking and placing unit according to preset trajectory information, wherein the lifting unit is preferably configured to raise or lower the cargo picking and placing unit from the first height to the second height when the cargo handling robot arrives at the second position.

FIG. 3 shows one preferred scheme of preset trajectory information, wherein the trajectory information includes continuous uniform acceleration stage I, uniform velocity stage II and uniform deceleration stage III. According to one preferred implementation mode, the control unit calculates a time t needed in the movement from the first position to the second position, and calculates a height difference *h* between the first height and the second height. By adjusting the trajectory information of the cargo picking and placing unit (e.g., by adjusting the acceleration or the maximum velocity of the trajectory of the cargo picking and placing unit), the time needed by the cargo picking and placing unit to move for a distance of *h* is also enabled to be *t.* So that when the cargo handling robot reaches the second position, the cargo picking and placing unit is also raised or lowered to the right height.

According to one preferred implementation mode of the present invention, after the cargo handling robot moves to the second position, the control device is configured to keep the cargo picking and placing unit stationary in a vertical direction in the course of placing the cargo on the shelf at the second position.

The working process of the cargo handling robot of the present invention is described below with reference to FIGS. 3 and 4.

As shown in FIG. 4, when the fork arm platform 208 is located in front of the first layer of the shelf, the camera or radar 209 in the front of the fork arm measures the distance L1 to the pallet (e.g., measuring the distance by radar or by using the camera to aim at the QR code), and the cargo can be picked to the fork arm platform 208 by controlling the retractable motor 204 to actuate the fork arm 203 to extend outwards for the distance L (where L = L1 + L2, and L2 is a length of the pallet), then controlling the lifting motor 205 to drive the fork arm platform 208 to rise by the height *h,* and next controlling the retractable motor to retract the fork arm.

After the cargo on the first layer is obtained, the cargo is required to be placed on the third layer of another shelf. The robot moves at first. At the beginning of the movement, the trajectory information about the fork arm platform moving from a height H1 of the first layer of the shelf to a height H2 of the third layer of the shelf is planned according to the trajectory time of the movement stage (the time when the robot moves), and the trajectory information mainly includes the acceleration, velocity and position information of each sampling period, as shown in FIG. 4. In the process of the movement, the lifting motor is operated according to the trajectory information as planned in advance, and the lifting motor drives the fork arm platform to the third layer through chain drive.

After the AGV trolley and the fork arm synchronously move in place, the retractable motor is controlled to actuate the fork arm 3 to extend outwards for the distance L, then the lifting motor is controlled to drive the fork arm platform to lower by the height *h* to put the cargo on the shelf, and then the retractable motor is controlled to retract the fork arm, thus a process from picking to releasing the cargo can be completed

In this process, the motion of the fork arm is linked with the movement of the AGV trolley, which saves the time for the fork arm to rise and fall independently, thus saving the time for picking and placing the cargo.

The lifting trajectory of the fork arm is planned according to the time when the chassis moves, so as to make the time of arriving at the lifting position consistent with the moving time of the chassis.

Described above are merely better examples of the present invention, which are not intended to limit the present invention.

At last, it should be noted that the contents described above are just preferable examples of the present invention, and are not used to limit the present invention. Although the detailed description of the present invention has been provided with reference to the foregoing examples, those skilled in the art still may make modifications to the technical solutions recorded in various examples described above, or conduct equivalent replacement of part of technical features therein.

## Claims

1. A control method (100) for a cargo handling robot (200), wherein the cargo handling robot (200) comprises a motion unit, a cargo picking and placing unit, and a lifting unit, the cargo picking and placing unit and the lifting unit are carried by the motion unit, and the lifting unit is configured to raise or lower the cargo picking and placing unit, the control method (100) comprising:
receiving (S101) an operation instruction for the cargo handling robot (200);
controlling (S102), according to the operation instruction, the motion unit of the cargo handling robot (200) to move to a shelf at a first position and pick a cargo at a first height;
controlling (S103), according to the operation instruction, the motion unit of the cargo handling robot (200) to move to a shelf at a second position and place the cargo at a second height on the shelf at the second position, wherein the lifting unit raises or lowers the cargo picking and placing unit from the first height to the second height in the course of movement of the cargo handling robot (200) from the first position to the second position, wherein the lifting unit is configured to raise or lower the cargo picking and placing unit according to preset trajectory information, such that the cargo picking and placing unit is raised or lowered from the first height to the second height when the cargo handling robot (200) arrives at the second position,
**characterized in that** the step of picking the cargo at the first height includes: measuring a distance L1 from the cargo picking and placing unit to the cargo, and controlling the cargo picking and placing unit to extend outwards a distance L to pick the cargo at the first height, wherein L = L1 + L2, and L2 refers to a length of the cargo or a pallet that carries the cargo.

2. The control method (100) according to claim 1, **characterized in that** the trajectory information includes continuous uniform acceleration, uniform velocity and uniform deceleration stages.

3. The control method (100) according to claim 1, **characterized in that** after the cargo handling robot (200) moves to the second position, the cargo picking and placing unit is stationary in a vertical direction in the course of placing the cargo on the shelf at the second position.

4. A cargo handling robot (200), comprising:
a motion unit;
a cargo picking and placing unit, carried by the motion unit and configured to pick a cargo from a shelf or place the cargo on the shelf;
a lifting unit, carried by the motion unit and configured to raise or lower the cargo picking and placing unit; and
a control unit, coupled with the motion unit, the cargo picking and placing unit, and the lifting unit, and configured to be capable of executing the control method (100) according to claim 1.

5. The cargo handling robot (200) according to claim 4, **characterized in that** the cargo handling robot (200) further comprises a camera or radar (209), coupled with the control unit, and configured to be capable of measuring a distance between the cargo picking and placing unit and the cargo.

6. The cargo handling robot (200) according to claim 5, **characterized in that** the control unit is configured to be capable of controlling the cargo picking and placing unit to pick the cargo according to the distance measured by the camera or radar (209).

7. The cargo handling robot (200) according to any one of claims 4 to 6, **characterized in that** the lifting unit is configured to raise or lower the cargo picking and placing unit from the first height to the second height when the cargo handling robot (200) arrives at the second position.

8. The cargo handling robot (200) according to claim 7, **characterized in that** the trajectory information includes continuous uniform acceleration, uniform velocity and uniform deceleration stages.

9. The cargo handling robot (200) according to any one of claims 4 to 6, **characterized in that** the control device is configured to: after the cargo handling robot (200) moves to the second position, keep the cargo picking and placing unit stationary in a vertical direction in the course of placing the cargo on the shelf at the second position.

## Patentansprüche

1. Steuerverfahren (100) für einen Frachthandhabungsroboter (200), wobei der Frachthandhabungsroboter (200) eine Bewegungseinheit, eine Frachtaufnahme- und Ablageeinheit und ein Hubwerk umfasst, wobei die Frachtaufnahme- und Ablageeinheit sowie das Hubwerk von der Bewegungseinheit getragen werden, und wobei das Hubwerk dazu konfiguriert ist, die Frachtaufnahme- und Ablageeinheit anzuheben oder abzusenken,
wobei das Steuerverfahren (100) umfasst:
Empfangen (S101) einer Betriebsanweisung für den Frachthandhabungsroboter (200);
Steuern (S102) der Bewegungseinheit des Frachthandhabungsroboters (200) gemäß der Betriebsanweisung, um zu einem Regal an einer ersten Position zu fahren und eine Fracht auf einer ersten Höhe aufzunehmen;
Steuern (S103) der Bewegungseinheit des Frachthandhabungsroboters (200) gemäß der Betriebsanweisung, um zu einem Regal an einer zweiten Position zu fahren und die Fracht auf einer zweiten Höhe auf dem Regal an der zweiten Position abzulegen, wobei während der Bewegung des Frachthandhabungsroboters (200) von der ersten Position zur zweiten Position das Hubwerk die Frachtaufnahme- und Ablageeinheit von der ersten Höhe auf die zweite Höhe anhebt oder absenkt, wobei das Hubwerk dazu konfiguriert ist, die Frachtaufnahme- und Ablageeinheit gemäß vordefinierter Trajektorieninformation anzuheben oder abzusenken, sodass beim Erreichen der zweiten Position durch den Frachthandhabungsroboter (200) die Frachtaufnahme- und Ablageeinheit von der ersten Höhe auf die zweite Höhe angehoben oder abgesenkt wird,
**gekennzeichnet dadurch, dass** der Schritt des Aufnehmens der Fracht auf der ersten Höhe umfasst:
Messen eines Abstands L1 von der Frachtaufnahme- und Ablageeinheit zur Fracht, und
Steuern der Frachtaufnahme- und Ablageeinheit, um nach außen um eine Distanz L auszufahren, um die Fracht auf der ersten Höhe aufzunehmen, wobei L = L1 + L2 gilt und L2 einer Länge der Fracht oder einer Palette, die die Fracht trägt, entspricht.

2. Steuerverfahren (100) nach Anspruch 1, **dadurch gekennzeichnet, dass** die Trajektorieninformation kontinuierliche Phasen gleichmäßiger Beschleunigung, gleichmäßiger Geschwindigkeit und gleichmäßiger Verlangsamung umfasst.

3. Steuerverfahren (100) nach Anspruch 1, **dadurch gekennzeichnet, dass** nachdem der Frachthandhabungsroboter (200) zur zweiten Position gefahren ist, die Frachtaufnahme- und Ablageeinheit im Verlauf des Ablagens der Fracht auf dem Regal an der zweiten Position in vertikaler Richtung unbeweglich bleibt.

4. Frachthandhabungsroboter (200), umfassend:
eine Bewegungseinheit;
eine Frachtaufnahme- und Ablageeinheit, die von der Bewegungseinheit getragen wird und konfiguriert ist, eine Fracht aus einem Regal aufzunehmen oder auf dem Regal abzulegen;
ein Hubwerk, das von der Bewegungseinheit getragen wird und konfiguriert ist, die Frachtaufnahme- und Ablageeinheit anzuheben oder abzusenken; und
eine Steuereinheit, die mit der Bewegungseinheit, der Frachtaufnahme- und Ablageeinheit sowie dem Hubwerk gekoppelt ist und konfiguriert ist, das Steuerverfahren (100) nach Anspruch 1 ausführen zu können.

5. Frachthandhabungsroboter (200) nach Anspruch 4,
**gekennzeichnet dadurch, dass** der Frachthandhabungsroboter (200) weiterhin umfasst:
eine Kamera oder ein Radar (209), das/die mit der Steuereinheit gekoppelt ist und konfiguriert ist, eine Distanz zwischen der Frachtaufnahme- und Ablageeinheit und der Fracht messen zu können.

6. Frachthandhabungsroboter (200) nach Anspruch 5,
**gekennzeichnet dadurch, dass** die Steuereinheit konfiguriert ist, die Frachtaufnahme- und Ablageeinheit gemäß der von der Kamera oder dem Radar (209) gemessenen Distanz steuern zu können, um die Fracht aufzunehmen.

7. Frachthandhabungsroboter (200) nach einem der Ansprüche 4 bis 6,
**gekennzeichnet dadurch, dass** das Hubwerk konfiguriert ist, die Frachtaufnahme- und Ablageeinheit von der ersten Höhe auf die zweite Höhe anzuheben oder abzusenken, wenn der Frachthandhabungsroboter (200) die zweite Position erreicht.

8. Frachthandhabungsroboter (200) nach Anspruch 7,
**gekennzeichnet dadurch, dass** die Trajektorieninformation kontinuierliche Phasen gleichmäßiger Beschleunigung, gleichmäßiger Geschwindigkeit und gleichmäßiger Verlangsamung umfasst.

9. Frachthandhabungsroboter (200) nach einem der Ansprüche 4 bis 6,
**gekennzeichnet dadurch, dass** die Steuereinheit konfiguriert ist:
nachdem der Frachthandhabungsroboter (200) zur zweiten Position gefahren ist, die Frachtaufnahme- und Ablageeinheit im Verlauf des Ablagens der Fracht auf dem Regal an der zweiten Position in vertikaler Richtung unbeweglich zu halten.

## Revendications

1. Procédé de commande (100) pour un robot de manutention de fret (200), dans lequel le robot de manutention de fret (200) comprend une unité de mouvement, une unité de prélèvement et de placement de cargaison et une unité de levage, l'unité de prélèvement et de placement de cargaison et l'unité de levage sont portées par l'unité de mouvement, et l'unité de levage est configurée pour soulever ou abaisser l'unité de prélèvement et de placement de cargaison, le procédé de commande (100) comprenant :
réception (S101) d'une instruction d'utilisation pour le robot de manutention de fret (200) ;
commande (S102), selon l'instruction d'utilisation, de l'unité de mouvement du robot de manutention de fret (200) pour se déplacer vers une étagère en première position et prélever une cargaison à une première hauteur ;
commande (S103), conformément à l'instruction d'utilisation, de l'unité de mouvement du robot de manutention de fret (200) pour se déplacer vers une étagère en deuxième position et placer la cargaison à une deuxième hauteur sur l'étagère en deuxième position, l'unité de levage soulevant ou abaissant l'unité de prélèvement et de placement de la cargaison de la première à la deuxième hauteur au cours du mouvement du robot de manutention de fret (200) à partir de la première position à la deuxième position, dans laquelle l'unité de levage est configurée pour lever ou abaisser l'unité de prélèvement et de placement de la cargaison selon des informations de trajectoire prédéfinies, de sorte que l'unité de prélèvement et de placement de la cargaison soit levée ou abaissée de la première hauteur à la deuxième hauteur lorsque le robot de manutention de fret (200) arrive à la deuxième position,
**caractérisé en ce que** :
l'étape de prélèvement de la cargaison à la première hauteur comprend : la mesure d'une distance L1 entre l'unité de prélèvement et de placement de la cargaison et la cargaison, et le contrôle de l'unité de prélèvement et de placement de la cargaison pour s'étendre vers l'extérieur d'une distance L pour prélever la cargaison à la première hauteur, où L = L1 + L2, et L2 fait référence à une longueur de la cargaison ou d'une palette qui transporte la cargaison.

2. Procédé de commande (100) selon la revendication 1, **caractérisé en ce que** l'information de trajectoire comprend une accélération uniforme continue, une vitesse uniforme et des paliers de décélération uniformes.

3. Procédé de commande (100) selon la revendication 1, **caractérisé en ce qu'**après le déplacement du robot de manutention de fret (200) vers la deuxième position, l'unité de prélèvement et de placement de la cargaison est stationnaire dans une direction verticale au cours du placement de la cargaison sur l'étagère à la deuxième position.

4. Robot de manutention de fret (200), comprenant :
une unité de mouvement ;
une unité de prélèvement et de placement de fret, transportée par l'unité de mouvement et configurée pour prélever une cargaison sur une étagère ou placer la cargaison sur l'étagère ;
une unité de levage, portée par l'unité de mouvement et configurée pour soulever ou abaisser l'unité de prélèvement et de placement de la cargaison ; et
une unité de commande, couplée à l'unité de mouvement, à l'unité de prélèvement et de placement de la cargaison et à l'unité de levage, et configurée pour être capable d'exécuter le procédé de commande (100) selon la revendication 1.

5. Robot de manutention de fret (200) selon la revendication 4, **caractérisé en ce que** le robot de manutention de fret (200) comprend en outre une caméra ou un radar (209), couplé à l'unité de commande, et configuré pour être capable de mesurer une distance entre l'unité de prélèvement et de placement de cargaison et la cargaison.

6. Robot de manutention de fret (200) selon la revendication 5, **caractérisé en ce que** l'unité de commande est configurée pour être capable de commander l'unité de prélèvement et de placement de la cargaison pour prélever la cargaison en fonction de la distance mesurée par la caméra ou le radar (209).

7. Robot de manutention de fret (200) selon l'une quelconque des revendications 4 à 6, **caractérisé en ce que** l'unité de levage est configurée pour soulever ou abaisser l'unité de prélèvement et de placement de marchandises de la première hauteur à la seconde hauteur lorsque le robot de manutention de fret (200) arrive à la deuxième position.

8. Robot de manutention de fret (200) selon la revendication 7, **caractérisé en ce que** les informations de trajectoire comprennent une accélération uniforme continue, une vitesse uniforme et des étapes de décélération uniformes.

9. Robot de manutention de fret (200) selon l'une quelconque des revendications 4 à 6, **caractérisé en ce que** le dispositif de commande est configuré, une fois que le robot de manutention de fret (200) se déplace vers la deuxième position, pour maintenir l'unité de prélèvement et de placement de cargaison immobile dans une direction verticale au cours du placement de la cargaison sur l'étagère en deuxième position.
